(19) Europäisches Patentamt
European Patent Office
Office européen des brevets

(11) Publication number: **0 145 323**
**B1**

(12) # EUROPEAN PATENT SPECIFICATION

(45) Date of publication of patent specification: **11.05.88**

(51) Int. Cl.$^4$: **C 08 L 63/00** // (C08L63/00, 71:02),(C08L63/00, 71:02, 9:02)

(21) Application number: **84307895.7**

(22) Date of filing: **14.11.84**

(54) **Toughened epoxy composition.**

(30) Priority: **18.11.83 US 553162**

(43) Date of publication of application:
**19.06.85 Bulletin 85/25**

(45) Publication of the grant of the patent:
**11.05.88 Bulletin 88/19**

(84) Designated Contracting States:
**CH DE FR GB LI**

(56) References cited:
**EP-A-0 014 745**
**GB-A- 972 949**
**GB-A-1 271 064**
**GB-A-1 349 569**
**US-A-3 966 837**

(73) Proprietor: **LOCTITE CORPORATION**
**705 North Mountain Road**
**Newington, Connecticut 06111 (US)**

(72) Inventor: **Drain, Kieran Francis**
**11455 E. Huffman, No. 9**
**Parma Heights Ohio 44130 (US)**

(74) Representative: **Marchant, James Ian et al**
**Elkington and Fife High Holborn House**
**52/54 High Holborn**
**London WC1V 6SH (GB)**

**EP 0 145 323 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical Field

The present invention relates to a toughened epoxy resin. Polyepichlorohydrin is utilized in an epoxy component which reacts with a hardener component to produce the resin. More specifically, the present invention relates to the use of liquid polyepichylorohydrin to toughen room temperature cured resins.

Background Art

Heretofore, polyepichlorohydrin elastomer solids have been used in the precision molding of intricate rubber parts since they have a highly fluid nature at elevated temperatures. However, such elastomers have never been utilized in association with room temperature cured epoxy resins.

R. S. Drake in an article entitled "A Survey of Rubber-Toughened Thermosets from Concept to Commercial Use," Proc. Polym. Mat. Sci. & Eng., Vol. 49, 1983, pages 220—222, traces the history of polybutadiene/acrylonitrile elatomers which have been used to toughen or modify thermoplastics and thermosets, for example epoxy resins. Similarly, Alan R. Siebert in an article entitled "Morphology and Dynamic Mechanical Behavior of Rubber-Toughened Thermosets," Proc. Polym. Mat. Sci. & Eng., Vol. 49, 1983, pages 427—431 reviews the work of various persons incorporating low levels of a liquid carboxylic acid terminated butadiene-acrylonitrile copolymer to a normally brittle epoxy resin, whereby the crack-resistance and impact strength were significantly improved. Bimodal particle systems, phase inversion, adhesive and composite systems, and the like are also discussed. However, none of these references teach or even suggest the use of polyepichlorohydrin in a room temperature cured epoxy resin.

Another category of tough structural adhesives is the rubber-toughened acrylics. U.S. Patent Nos. 4,051,195 to McWharter; 4,117,038 to Lehmann; and 4,126,504 to Wolinski thus relate to acrylic adhesives. Although Wolinski discloses poly(ethers of epichlorohydrin), such compounds are classified as nonreactive elastomers.

U.S. Patent Nos. 3,966,837 and 4,107,116 to Riew, although containing polyepichlorohydrin, relates to a one component system when reaction of the polyepichlorohydrin only occurs at elevated temperatures. Thus is in sharp contrast from applicant's invention which reacts at ambient temperature with the hardener, and not the epoxy and further relates to a two-component system.

Similarly, Sakamoto, U.S. Patent No. 3,945,972 relates to the use of polyepichlorohydrin monoglycidyl ether in a reactive diluent prepared by polymerizing epichlorohydrin and methylepichlorohydrin with a monohydric phenol or alcohol and treating the resulting addition polymer with an alkaline substance. Reaction occurs at elevated temperatures apparently with the epoxy and not a hardener. Hence, it is readily distinguished.

The remaining patents generally relate to epoxy resins. For example, U.S. Patent No. 4,128,531 relates to the use of polyfunctional isocyanates, whereas 4,135,037 relates to epoxidized rubbery copolymers and rosin-based tackifiers. U.S. Patent No. 4,273,889 relates to a blend of epoxy resins with isopropenyl phenol linear polymers. U.S. Patent No. 4,383,060 relates to an epoxy adhesive containing an imadazole curing agent. U.S. Patent No. 4,397,998 is a rapid curing epoxy composition containing a polyalkylene ether glycol.

Summary of the Invention

Accordingly, it is an aspect of the present invention to produce a toughened epoxy resin.

It is a further aspect of the present invention to produce a toughened epoxy resin, as above, wherein polyepichlorohydrin is utilized in the epoxy component.

It is still another aspect of the present invention to produce a toughened epoxy resin, as above, having properties such as excellent adhesion, flexibility and sandibility.

It is a yet further aspect of the present invention to produce a toughened epoxy resin, as above, wherein said polyepichlorohydrin reacts with said hardener through a grafting reaction.

It is yet another aspect of the present invention to produce a toughened epoxy resin, as above, wherein optionally an amine terminated butadiene-acrylonitrile copolymer is utilized in the hardener component.

These and other aspects of the present invention will become apparent from the following specification which more fully describes the invention.

In general, a two-part ambient temperature curing epoxy resin, comprises: an epoxy component and a hardener component; said epoxy component comprising an epoxy resin and polyepichlorohydrin, the amount of said polyepichlorohydrin being from about 2 percent to about 25 percent by weight based upon the total weight of said epoxy component; said hardener component comprising a polymercaptan.

Best mode for carrying out the Invention

A toughened epoxy resin is produced from a two part ambient temperature curing epoxy resin formulation having an epoxy component and a hardener component. Polyepichlorohydrin is present in the epoxy component and, upon cure, is chemically incorporated into the resin as through a grafting reaction with either the cured epoxy-hardener resin product and/or the hardener. The epoxy compound can be conventional compounds such as cycloaliphatic epoxies, epoxidized novolacs, or an epoxy compound derived from an epichlorohydrin and a dihydric phenol. Dihydric phenols are exemplified by resorcinol, hydroquinone, bisphenol A, p,p'-dihydroxybenzophenone, p,p'-dihydroxydiphenyl, p,p'-dihydroxyphenyl

ethane, bis(2-hydroxynaphthyl) ethane, 1,5-dihydroxynaphthalene with bisphenol A being preferred. A preferred epoxy compound is the diglycidyl ethers of bisphenol A (DGEBA). Such epoxies are well known to those skilled in the art and generally have epoxy groups on each end with a low molecular weight (from about 900 to about 3,000) polymer.

The epoxy component conventionally contains fillers and pigments of the type common to the epoxy field with examples of such conventional items including crystalline quartz, barytes, magnetite, silicates, aluminum silicates, calcium sulfates, calcium carbonate, talc, titania, clays, barium salts, and the like. Naturally, an amount is utilized depending upon the desired end hardness of the epoxy resin and generally ranges from about 5 to about 80 percent by weight and preferably from about 40 to about 70 percent by weight, based upon the total weight of the epoxy component. Should it be desired that sandibility is not an important aspect of the final epoxy resin, a smaller amount of filler can be utilized, as from about 0 to about 30 percent by weight.

Polyepichlorohydrin is an hydroxyl terminated liquid polyether having the formula

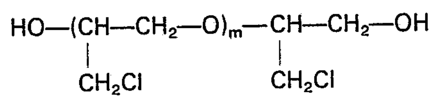

wherein m ranges from about 8 to about 48 and preferably from about 15 to about 37. Hence, the polymer has a number average molecular weight of from about 800 to about 5,000 and desirably from about 1,500 to about 3,800. Polyepichlorohydrin is available as Hydrin 10X1 Polymer or Hydrin 10X2 Polymer, a trademark of the B. F. Goodrich Company. The amount of polyepichlorohydrin utilized in the present invention ranges from about 2 to 25 percent by weight, and preferably from about 5 to about 15 percent by weight based upon the total weight of the epoxy component.

Polymercaptans useful in the practice of the present invention are prepared by reacting an allyl ether such as the allyl of polyoxypropylated pentaerythritol or polyoxypropylated sorbitol, with hydrogen sulfide in benzene in the presence of an azo catalyst such as 2,2'-azobis-(2,4-dimethyl valeronitrile) at a pressure in the range of 0.55 to 2.68 M Pa (80 to 388 psi) and a temperature in the range of 20° to 90°C. A more complete description of the preparation of the polymercaptans used in the practice of the present invention can be found in U.S. Patent No. 4,092,293. A specific and preferred example is a mercaptan of the following formula:

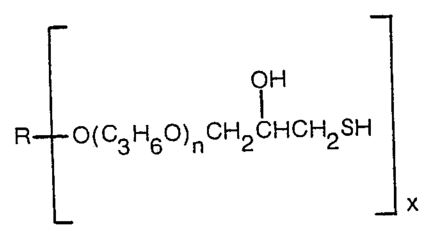

where x is at least 2, and preferably 3, where R is an aliphatic hydrocarbon known to the art and n is at least 1 and preferably 1 or 2. Such a mercaptan is a liquid polymer which imparts rapid-cure characteristics to epoxy compounds in combination with various amines and is commercially available as Dion DPM 3—800 LC, a trademark of the Diamond Shamrock Chemical Corporation.

Various conventional or common accelerators may be utilized, desirably amine accelerators and desirably tertiary amine accelerators of the formula:

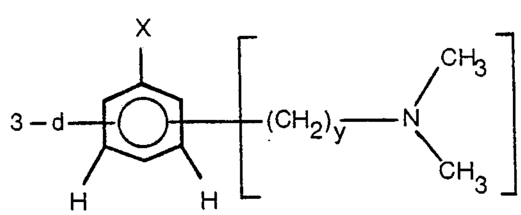

where d is an integer of from 1 to 3 inclusive, x is hydrogen or hydroxyl, and y is 1 or 2.

Included among such amines are benzyl dimethylamine; dimethylaminomethyl phenol; dimethylaminoethyl phenol; 2,4-di(dimethylaminomethyl)phenol; 2,4,6-tri(dimethylaminomethyl)phenol; alpha methyl benzyldimethylamine.

Other amines which are suitable for use in the practice of the present invention include dimethylcyclohexylamine; N,N'-dimethylpiperazine; dimethylamino ethanol; N-methyl diethanolamine; triethylamine; with diethylene triamine being a preferred amine. The amount of the amine accelerator typically is from about 1 percent to about 20 percent by weight and preferably from about 2 percent to about 10 percent by weight based upon the total weight of the hardener component.

Desirably, the hardener component also contains fillers as of the same type and in the same amounts as the epoxy components. Once again, should it be desired that the final epoxy resin need not have good sandibility properties, a lower amount of filler is utilized.

The epoxy resin of the present invention can be formed by combining the epoxy component and the hardener component as above described to produce a cure at ambient temperature. In addition to the polyepichlorohydrin in the epoxy component, a second modifier may be utilized in the hardener component. Desirably, the second modifier is a copolymer of butadiene and acrylonitrile having an acrylonitrile content of from about 5 to about 26 percent by weight and preferably from about 8 to about 18 percent by weight. Preferably, an amine terminated butadiene-acrylonitrile polymer is desirable. Specific examples include Hycar Polymer 1300X16 and 1300X21, a trademark of the B. F. Goodrich Company. The amount of the polybutadiene acrylonitrile copolymer ranges from about 2 to about 25 percent by weight and preferably from about 5 to about 15 percent by weight based upon the total weight of the hardener component and the molecular weight ranges from about 3,000 to about 5,000, with from about 3,500 to about 4,800 being preferred. Generally, adequate toughening effects are readily obtained solely through the use of polyepichlorohydrin in the epoxy component and hence the copolymer of butadiene and acrylonitrile need not be utilized.

According to the present invention, since polyepichlorohydrin exists in the epoxy component and the optional butadiene-acrylonitrile copolymer exists in the hardener component, a system exists wherein both such rubbery type compounds will not react with their respective carriers, that is epichlorohydrin with the epoxy compound and the polybutadiene acrylonitrile with the mercaptan compound. Hence, the two part epoxy resin system has good shelf stability. However, upon mixing, the epoxy compound will, of course, curingly react with the mercapan compound and the polyepichlorohydrin will react with the hardener. That is, not only does the polyepichlorohydrin graftingly react with the hardener epoxy backbone, but it will also undergo a grafting reaction with the hardener. Should the optional butadiene acrylonitrile copolymer be utilized, it would chemically react with the epoxy. Thus, the polyepichlorohydrin compound would be tied into the cured epoxy yielding a truly toughened system.

All such reactions occur at an ambient temperature, that is from about 15° to about 50°C, with from about 17° to 25°C being preferred. The excess by weight of said epoxy to said hardener is from about 200:1 to about 1:1, with from about 3:1 to 1:1 being preferred. The ratio of the epoxy component to said hardener component is from about 50:1 to about 1:50 with from about 4:1 to 1:4 being preferred. The primary reaction between the epoxy compound and the hardener generally occurs within a few to several minutes, whereas the secondary reaction of the polyepichlorohydrin usually occurs within a 24 hour period.

In addition to the above compounds, small amounts of various additives may be added such as colorants, diluents, and the like. The cured epoxy composition of the present invention unexpectedly has a large improvement in toughness and yet maintains excellent adhesion with flexibility comparable to compositions of the same general type of epoxy. The epoxy resin system of the present invention can thus be utilized in any typical epoxy situation, and especially in those situations where an extremely tough and flexible epoxy is needed. Specific uses include a patch or repair for urethane bumbers or as a portion of an automotive door panel, and the like.

The invention will be better understood by reference to the following examples.

Example 1

A two-part epoxy formulation described below was prepared. The formulation cures on mixing at room temperature to give the following properties after 16 hours of room temperature aging.

Tensile shear strength. Solvent wiped mild steel laps (ASTM—D—1002—64) 1600 psi

T Peel. ASTM—D—1876. Solvent wiped steel 9 psi.

The same formulation with the polyepichlorohydrin replaced by a polybutadiene acrylonitrile liquid elastomer, carboxy terminated, exhibited properties of only 300 psi tensile shear and 4 psi T peel. Thus, the polyepichlorohydrin is acting as a true toughener and is not producing simply a soft epoxy.

FORMULATION

PART A

| | Weight |
|---|---|
| DGBPA resin (Ciba-Geigy 6010) | 37.80 |
| Polyepichlorohydrin (Goodrich 10X—1) | 10.00 |
| Blended inorganic fillers | 61.20 |
| Total | 100.00 |

PART B

| | Weight |
|---|---|
| Mercaptan terminated liquid polymer (Dion 3 800LC) | 28.42 |
| Tertiary aliphatic amine accelerator (Dow DEH 20) | 5.69 |
| Amine terminated liquid elastomer (Hycar ATBN 1300 × 16) | 5.00 |
| Blended inorganic fillers | 60.89 |
| Total | 100.00 |

The blended fillers were chosen from: magnetite, barytes, calcium carbonate, silica, and aluminum silicate. Parts A and B were mixed in equal amounts.

As apparent from the above comparative data, at least a two-fold increase in tensile peel was achieved with at least a five-fold increase in tensile shear strength over previous standard toughened epoxies.

Example 2

A two-part epoxy formulation described below was prepared. The formulation was cured at room temperature by mixing 7 parts of A with 2 parts of B. The formulation was used as a body filler on automotive plastic panels, i.e., sheet molding compound (polyester) S.M.C. and reaction injection molded urethane (R.I.M.). The formulation cures to give a repair which may be sanded to a smooth finish and which exhibits superior resistance to cracking and debonding upon flexing the automotive panels as compared to standard polyester body fillers, such as Loctites Easy Does It™ and White Knight™.

FORMULATION

PART A

| | Weight |
|---|---|
| DGBPA | 25.12 |
| Polyepichlorohydrin | 9.97 |
| Blended inorganic fillers | 64.91 |
| Total | 100.00 |

PART B

| | Weight |
|---|---|
| Mercaptan terminated liquid polymer | 63.88 |
| Tertiary aliphatic amine accelerator | 12.79 |
| Blended inorganic fillers | 23.33 |
| Total | 100.00 |

The same compounds were used as in Example 1. The fillers were chosen from: magnetite, barytes, calcium carbonate, silica, and aluminum silicate.

**Claims**

1. A two-part epoxy resin composition of the type having a first part comprising an epoxy component, and a second part comprising a hardener component, the said composition being curable at ambient temperatures characterized in that the epoxy component comprises an epoxy resin and polyepichlorohydrin, the amount of polyepichlorohydrin being from 2 percent to 25 percent by weight based upon the total weight of the epoxy component and the hardener component comprising a polymercaptan compound.

2. A two-part ambient epoxy resin composition according to claim 1, characterized by one or more of the following features.

(a) the number average molecular weight of said polyepichlorohydrin is from 800 to 5,000 and the ratio of said epoxy component to said hardener component is from 50:1 to 1:50; or

(b) further including an accelerator, the amount of accelerator ranging from 1 to 20 percent by weight based upon the total weight of said hardener component, wherein (i) said accelerator preferably is an amine accelerator of the formula

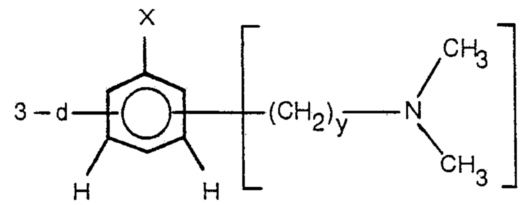

where d is an integer of from 1 to 3 inclusive, x is hydrogen or hydroxyl, and y is 1 or 2, and (ii) said epoxy compound preferably is a diglycidyl ether of bisphenol A, wherein said hardener comprises a mercaptan of the formula

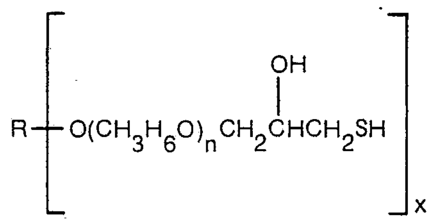

where x is at least 2, n is at least 1, and R is an aliphatic hydrocarbon, and wherein said ratio of said epoxy component to said hardener component is from 4:1 to 1:4.

3. A two-part epoxy resin composition according to either of claims 1 or 2, characterized by one or both of the following features:

(a) including from 5 to 80 percent by weight of a filler in said epoxy component, and from 5 to 80 percent by weight of a filler in said hardener component; and

(b) wherein said accelerator comprises an amine accelerator, preferably a tertiary amine accelerator of the formula:

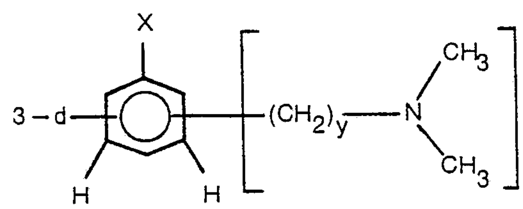

wherein d is an integer of from 1 to 3 inclusive, x is hydrogen or hydroxyl, and y is 1 or 2; benzyl dimethylamine; dimethylaminomethyl phenol; dimethylaminoethyl phenol; 2,4-di(dimethylaminomethyl) phenol; 2,4,6-tri(dimethylaminomethyl) phenol; alpha methyl benzyldimethylamine; dimethylcyclohexylamine; N,N'-dimethylpiperazine; dimethylamino ethanol; N-methyl diethanolamine or triethylamine.

4. A two-part epoxy composition according to any of claims 1 to 3, characterized by including a butadiene-acrylonitrile copolymer in said hardener component, the amount of said copolymer ranging from 2 percent to 25 percent based upon the total weight of said hardener component, the amount of said acrylonitrile in said copolymer ranging from 5 to 26 percent by weight, and the molecular weight of said copolymer ranging from 3,000 to 5,000.

5. A two-part epoxy resin composition according to claim 4, characterized in that the amount of said copolymer ranges from 5 percent to 15 percent, the amount of acrylonitrile in said copolymer ranges from 8 to 18 percent by weight, the molecular weight of said copolymer ranges from 3,000 to 5,000; said accelerator is diethylene triamine; and, said epoxy compound preferably is a diglycidyl ether of bisphenol A, wherein said hardener comprises a mercaptan of the formula

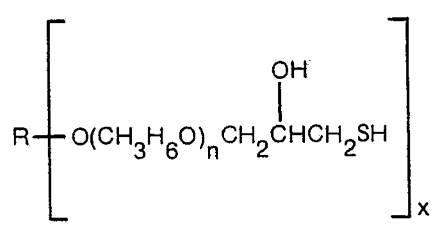

where x is at least 2, R is an aliphatic hydrocarbon, and n is 1 or 2, and wherein the amount of said epoxy component to said hardener component is from about 4:1 to about 1:4.

6. An epoxy-resin of the type comprising the ambient temperature-cured reaction product of an epoxy component and a hardener component, characterized in that the epoxy component comprises an epoxy compound and polyepichlorohydrin, the amount of polyepichlorohydrin being from 2 percent to 25 percent by weight based upon the total weight of said epoxy component, the number of average molecular weight of the epoxy component ranging from 800 to 5,000; and in that hardener component comprises a polymercaptan compound.

7. An epoxy resin according to claim 6, characterized by one or both of the following features:

(a) The ration of epoxy component to hardener component is from about 50:1 to 1:50; and

(b) including from 5 percent by weight to 80 percent by weight of a filler in said epoxy component, and including from 5 percent to 80 percent by weight of a filler in the hardener component.

8. An epoxy resin according to either of claims 6 or 7, characterized in that the molecular weight of the polyepichlorohydrin is from 1,500 to 3,800, in that the hardener is a polymercaptan having the formula

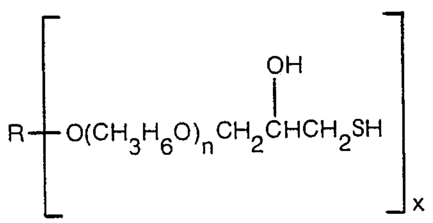

where x is at least 2, n is at least 1 and R is an aliphatic hydrocarbon, and in that the ratio of epoxy component to hardener component is from 4:1 to 1:4.

9. An epoxy resin according to claim 8, characterized by one or more of the following features:

(a) the ratio of said epoxy component to said hardener component is from 4:1 to 1:4, the amount of said polyepichlorohydrin is from 5 percent to 15 percent by weight, said epoxy compound is a diglycidyl ether of bisphenol A, and said polymercaptan hardener has the formula

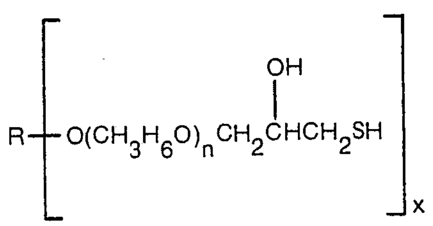

where x is at least 2, R is an aliphatic hydrocarbon, and n is 1 or 2, and the ratio of said epoxy component to said hardener component is from 4:1 to 1:4; and wherein said epoxy resin component preferably also includes a filler preferably in the range of from 5 to 80 percent by weight of said epoxy component, and said hardener component also includes a filler preferably in the range of from 5 to about 80 percent by weight of said hardener component;

(b) including a butadieneacrylonitrile copolymer having a molecular weight of from 3,000 to 5,000, the amount of acrylonitrile in said copolymer ranging from 5 percent to 26 percent by weight, and the amount of said copolymer ranging from 2 percent to 25 percent by weight based upon the total weight of said hardener component; and wherein the molecular weight of said copolymer preferably is from 3,500 to 4,800, the amount of said acrylonitrile in said copolymer is from 8 percent to 18 percent by weight, and the amount of said copolymer in said hardener component is from 5 percent to 15 percent by weight.

10. Use of an epoxy resin according to any of claims 6 to 9 in an automobile, preferably in a bumper or an exterior portion of said automobile.

**Patentansprüche**

1. Zweiteilige Epoxyharzzusammensetzung von der Art mit einem eine Epoxykomponente enthaltenden ersten Teil und eine Härterkomponente enthaltenden zweiten Teil, welche Zusammensetzung bei Umgebungstemperatur härtbar ist, dadurch gekennzeichnet, dass die Epoxykomponente ein Epoxyharz und ein Polyepichlorhydrin umfasst, wobei die Menge an Polyepichlorhydrin 2 bis 25 Gew.-%, bezogen auf das Gesamtgewicht der Epoxykomponente, beträgt und die Härterkomponente eine Polymercaptanverbindung umfasst.

2. Zweiteilige Raumtemperatur-Epoxyharzzusammensetzung nach Anspruch 1, gekennzeichnet durch eines oder mehrere der folgenden Charakteristika:

(a) das Zahlenmittel-Molekulargewicht des Polyepichlorhydrins beträgt 800 bis 5000 und das Verhältnis der Epoxykomponente zur Härterkomponente beträgt 50:1 bis 1:50; oder

(b) weiteren Einschluss eines Beschleunigers, wobei die Menge an Beschleuniger im Bereich von 1 bis

20 Gew.-%, bezogen auf das Gesamtgewicht der Härterkomponente, liegt, worin (i) der Beschleuniger vorzugsweise ein Aminbeschleuniger der Formel ist

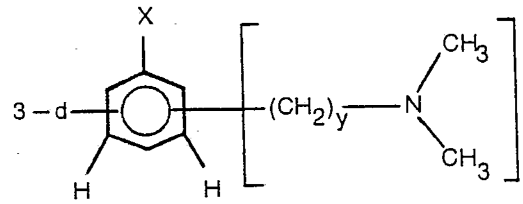

worin d eine ganze Zahl von 1 bis 3 einschliesslich ist, x Wasserstoff oder Hydroxyl ist und y 1 oder 2 ist, und (ii) die Epoxyverbindung vorzugsweise ein Diglycidylether von Bisphenol A ist, worin der Härter ein Mercaptan der Formel ist

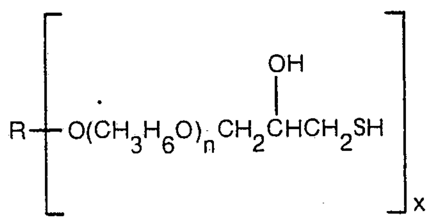

worin x wenigstens 2 ist, n wenigstens 1 ist und R ein aliphatischer Kohlenwasserstoff ist, und worin das Verhältnis der Epoxykomponente zur Härterkomponente 4:1 bis 1:4 beträgt.

3. Zweiteilige Epoxyharzzusammensetzung nach einem der Ansprüche 1 oder 2, gekennzeichnet durch eines oder beide der folgenden Charakteristika:

(a) Einschluss von 5 bis 80 Gew.-% eines Füllstoffs in der Epoxykomponente und 5 bis 80 Gew.-% eines Füllstoffs in der Härterkomponente; und

(b) worin der Beschleuniger einen Aminobeschleuniger umfasst, vorzugsweise einen tertiären Aminbeschleuniger der Formel

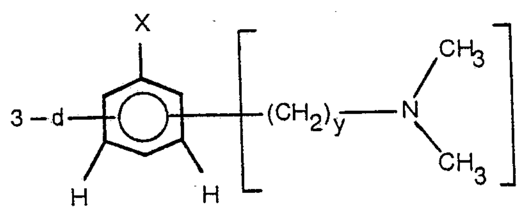

worin d eine ganze Zahl von 1 bis 3 einschliesslich ist, x Wasserstoff oder Hydroxyl ist und y 1 oder 2 ist; Benzyldimethylamin; Dimethylaminomethylphenol; Dimethylaminoethylphenol; 2,4-Di(dimethylaminomethyl)phenol; 2,4,6-Tri(dimethylaminomethyl)phenol; α-Methylbenzyldimethylamin; Dimethylcyclohexylamin; N,N'-Dimethylpiperazin; Dimethylaminoethanol; N-Methyldiethanolamin oder Triethylamin.

4. Zweiteilige Epoxyzusammensetzung nach einem der Ansprüche 1 bis 3, gekennzeichnet durch Einschluss eines butadien-Acrylnitril-Copolymeren in der Härterkomponente, wobei die Menge des Copolymeren im Bereich von 2% bis 25%, bezogen auf das Gesamtgewicht der Härterkomponente, liegt, die Menge des Acrylnitrils im Copolymeren im Bereich von 5 bis 26 Gew.-% liegt und das Molekulargewicht des Copolymeren im Bereich von 3000 bis 5000 liegt.

5. Zweiteilige Epoxyharzzusammensetzung nach Anspruch 4, dadurch gekennzeichnet, dass die Menge des Copolymeren im Bereich von 5% bis 15% liegt, die Menge an Acrylnitril im Copolymeren im Bereich von 8 bis 18 Gew.-% liegt, das Molekulargewicht des Copolymeren im Bereich von 3000 bis 5000 liegt; der Beschleuniger Diethylentriamin ist; und die Epoxyverbindung vorzugsweise ein Diglycidylether von Bisphenol A ist, worin der Härter ein Mercaptan der Formel umfasst

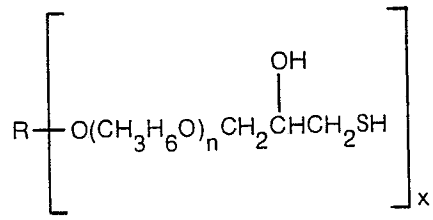

worin x wenigstens 2 ist, R ein aliphatischer Kohlenwasserstoff ist und n 1 oder 2 ist, und worin die Menge der Epoxykomponente zur Härterkomponente etwa 4:1 bis etwa 1:4 beträgt.

6. Epoxyharz von der Art, die das bei Umgebungstemperatur gehärtete Reaktionsprodukt einer Epoxykomponente und einer Härterkomponente umfasst, dadurch gekennzeichnet, dass die Epoxykomponente eine Epoxyverbindung und ein Polyepichlorhydrin umfasst, wobei die Menge an Polyepichlorhydrin 2 bis 25 Gew.-%, bezogen auf das Gesamtgewicht der Epoxykomponente, beträgt und das Zahlenmittel-Molekulargewicht der Epoxykomponente im Bereich von 800 bis 5000 liegt; und dadurch, dass die Härterkomponente eine Polymercaptanverbindung umfasst.

7. Epoxyharz nach Anspruch 6, gekennzeichnet durch eines oder beide der folgenden Charakteristika:

(a) das Verhältnis der Epoxykomponente zur Härterkomponente beträgt etwa 50:1 bis 1:50; und

(b) Einschluss von 5 Gew.-% bis 80 Gew.-% eines Füllstoffs in die Epoxykomponente und Einschluss von 5 bis 80 Gew.-% eines Füllstoffs in die Härterkomponente.

8. Epoxyharz nach einem der Ansprüche 6 oder 7, dadurch gekennzeichnet, dass das Molekulargewicht des Polyepichlorhydrins 1500 bis 3800 beträgt und dass der Härter ein Polymercaptan mit der Formel ist

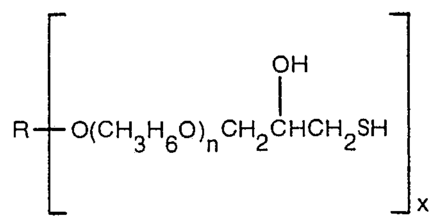

worin x weingstens 2 ist, n wenigstens 1 ist und R ein aliphatischer Kohlenwasserstoff ist, und dass das Verhältnis der Epoxykomponente zur Härterkomponente 4:1 bis 1:4 beträgt.

9. Epoxyharz nach Anspruch 8, gekennzeichnet durch eines oder mehrere der folgenden Charakteristika:

(a) das Verhältnis der Epoxykomponente zur Härterkomponente beträgt 4:1 bis 1:4, die Menge an Polyepichlorhydrin beträgt 5 bis 15 Gew-%, die Epoxyverbindung ist ein Diglycidylether von Bisphenol A und der Polymercaptanhärter hat die Formel

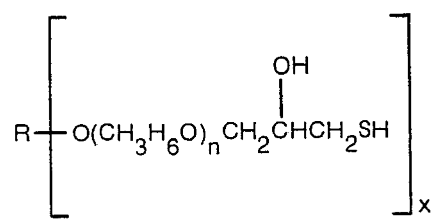

worin x wenigstens 2 ist, R ein aliphatischer Kohlenwasserstoff ist und n 1 oder 2 ist, und das Verhältnis der Epoxykomponente zur Härterkomponente 4:1 bis 1:4 beträgt; worin die Epoxyharzkomponente vorzugsweise auch einen Füllstoff, vorzugsweise im Bereich von 5 bis 80 Gew.-% der Epoxykomponente, einschliesst und die Härterkomponente auch einen Füllstoff, vorzugsweise im Bereich von 5 bis etwa 80 Gew.-% der Häerterkomponente, einschliesst;

(b) Einschluss eines Butadienacrylnitrilcopolymeren mit einem Molekulargewicht von 3000 bis 5000, wobei die Menge an Acrylnitril im Copolymer im Bereich von 5 bis 26 Gew.-% liegt und die Menge des Copolymeren im Bereich von 2 bis 25 Gew.-%, bezogen auf das Gesamtgewicht der Härterkomponente, liegt; und worin das Molekulargewicht des Copolymeren vorzugsweise 3500 bis 4800 beträgt, die Menge an Acrylnitril im Copolymer 8 bis 18 Gew.-% beträgt und die Menge des Copolymeren in der Härterkomponente 5 bis 15 Gew.-% beträgt.

10. Verwendung eines Epoxyharzes nach einem der Ansprüche 6 bis 9 in einem Automobil, vorzugsweise in einer Stossstange oder einem äusseren Teil des Automobils.

**Revendications**

1. Composition de résine époxy à deux composants, comprenant un composant époxy et un composant durcisseur, ladite composition étant durcissable à température ambiante, caractérisée en ce que le composant époxy comprend une résine et de la polyépichlorhydrine, la teneur en polyépichlorhydrine étant comprise entre 2 et 25% par rapport au poids total du composant époxy, et en ce que le composant durcisseur comprend un composé de polymercaptan.

2. Composition de résine époxy à deux composants, selon la revendication 1, caractérisé par une ou plusieurs des caractéristiques suivantes:

(a) le poids moléculaire moyen de la polyépichlorhydrine est compris entre 800 et 5,000 et le rapport entre le composant époxy et le composant durcisseur est compris entre 50:1 et 1:50, ou

(b) elle comprend en outre un accélérateur, la teneur en accélérateur étant comprise entre 1 et 20% par rapport au poids total du composant durcisseur, où ledit accélérateur (i) est de préference un accélérateur aminé de formule:

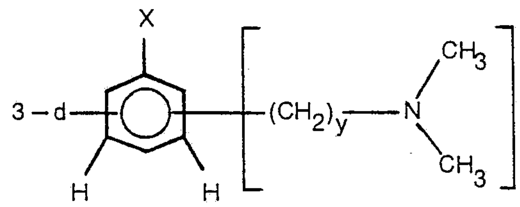

dans laquelle d est un entier de 1 à 3 inclusivement, x est H ou OH et y vaut 1 ou 2, ledit composé époxy (ii) est de préférence un éther diglycidylique de bisphénol A, où ledit durcisseur comprend un mercaptan de formule:

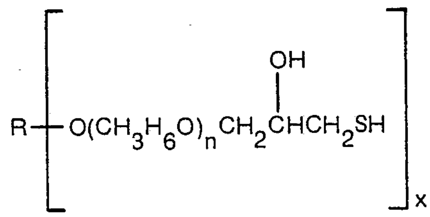

dans laquelle x vaut au moins 2, n vaut au moins 1 et R est un hydrocarbure aliphatique, et où ledit rapport entre le composant époxy et le composant durcisseur est compris entre 4:1 et 1:4.

3. Composition de résine époxy à deux composants selon l'une des revendications 1 ou 2, caractérisée par une ou les deux caractéristiques suivantes:

(a) elle comprend une charge à raison de 5 à 80% en poids dans le composant époxy et une charge à raison de 5 à 80% en poids dans le composant durcisseur; et

(b) ledit accélérateur comprend un accélérateur aminé, de préférence un accélérateur à amine tertiaire de formule:

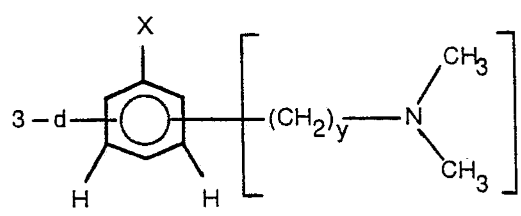

dans laquelle d est un entier 1 à 3 inclusivement, x est H ou OH et y vaut 1 ou 2; la benzyle diéthylamine; le diméthylaminométhyl phénol; le diméthylaminoéthyle phénol, le 2,4-di(diméthylaminométhyle) phénol; le 2,4,6-tri(diméthylaminométhyle); l'alpha méthyle benzylediméthylamine; la diméthylcyclohexylamine; la N,N'-diméthylpipérazine; le diméthylamino éthanol; la N-méthyl diéthanolamine ou triéthylamine.

4. Composition de résine époxy à deux composants selon l'une des revendications 1 à 3, caractérisée en ce qu'elle comprend un copolymère butadiène-acrylonitrile dans le composant durcisseur, la teneur de ce copolymère étant comprise entre 2 et 25% par rapport au poids total du composant durcisseur, la teneur de l'acrylontrile dans ledit copolymère étant comprise entre 5 et 26% en poids, et le poids moléculaire de copolymère étant compris entre 3,000 et 5,000.

5. Composition de résine époxy à deux composants selon la revendication 4, caractérisée en ce que la teneur dudit copolymère est comprise entre 5 et 15%, la teneur en acrylontrile dans ledit copolymère est comprise entre 8 et 18% en poids, le poids moléculaire dudit copolymère est compris entre 3,000 et 5,000; en ce que l'accélérateur est le diéthylène triamine; et en ce que ledit composé époxy est de préférence un

éther diglycidylique de bisphénol A, ledit durcisseur comprenant un mercaptan de formule:

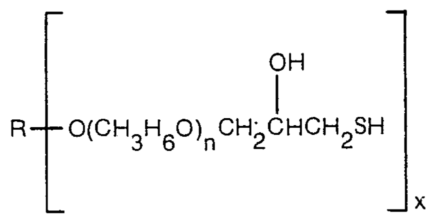

dans laquelle x vaut au moins 2, R est un hydrocarbure aliphatique, et n vaut 1 ou 2 le rapport entre le composant époxy et le composant durcisseur étant compris entre environ 4:1 et environ 1:4.

6. Résine époxy comprenant le produit de réaction durci à température ambiante d'un composant époxy et d'un composant durcisseur, caractérisée en ce que le composant époxy comprend un composé époxy et la polyépichlorhydrine, la teneur en polyépichlorhydrine étant comprise entre 2 et 25% par rapport au poids total du composant époxy, le poids moléculaire moyen du composant époxy étant compris entre 800 et 5,000; et en ce que le composant durcisseur comprend un composé de polymercaptan.

7. Résine époxy selon la revendication 6, caractérisée par une ou les deux caractéristiques suivantes:

(a) le rapport entre le composant époxy et le composant durcisseur est compris entre environ 50:1 et 1:50; et

(b) elle comprend une charge à raison de 5 à 80% en poids dans le composant époxy, et une charge à raison de 5 à 80% en poids dans le composant durcisseur.

8. Résine époxy selon l'une des revendications 6 ou 7, caractérisée en ce que le poids moléculaire de la polyépichlorhydrine est compris entre 1,500 et 3,800 en ce que le durcisseur est un polymercaptan ayant la formule suivante:

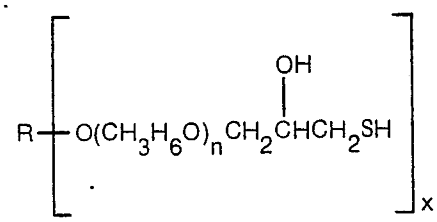

dans laquelle x vaut au moins 2, n vaut au moins 1, et R est un hydrocarbure alphatique, et en ce que le rapport entre le composant époxy et le composant durcisseur est compris entre 4:1 et 1:4.

9. Résine époxy selon la revendication 8, caractérisée par une ou plusieurs des caractéristiques suivantes:

(a) le rapport entre le composant époxy et le composant durcisseur est compris entre 4:1 et 1:4, la teneur en polyépichlorhydrine est comprise entre 5 et 15% en poids, le composé époxy est un éther diglycidylique de bisphénol A, et ledit durcisseur au polymercaptan a la formule suivante:

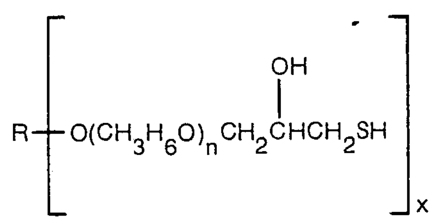

dans laquelle x vaut au moins 2, R est un hydrocarbure aliphatique, et n vaut 1 ou 2, et le rapport entre le composant époxy et le composant durcisseur est compris entre 4:1 et 1:4; et dans laquelle le composant époxy comprend aussi de préférence une charge, de préférence entre 5 et 80% en poids du composant époxy, et le composant durcisseur comprend aussi une charge, de préférence entre 5 et environ 80% en poids du composant durcisseur;

(b) elle comprend un coplymère butadiène-acrylonitrile ayant un poids moléculaire compris entre 3,000 et 5,000, la teneur en acrylonitrile dans ledit copolymère étant comprise entre 5 et 26% en poids, et la teneur dudit copolymère étant comprise entre 2 et 25% en poids par rapport au poids total du composant durcisseur, et dans laquelle le poids moléculaire dudit copolymère est de préférence compris entre 3,500 et 4,800, la teneur en acrylonitrile dans ce copolymère est comprise entre 8 et 18% en poids, et la teneur de ce copolymère dans le composant durcisseur est comprise entre 5 et 15% en poids.

10. Utilisation d'une résine époxy selon l'une des revendications 6 à 9 dans une automobile, de préférence dans un pare-chocs ou une partie extérieure de cette automobile.